# EUROPÄISCHE PATENTANMELDUNG

(11) **EP 4 180 256 A1**
(43) Veröffentlichungstag der Anmeldung: **17.05.2023**
(21) Anmeldenummer: 21207601.2
(22) Anmeldetag: 10.11.2021
(51) Int. Cl.: B60K 7/00, B60K 1/00, B60K 17/36, B60G 17/016

(54) **AUTOMOBIL UND VERFAHREN ZUM BETREIBEN EINES AUTOMOBILS**

(71) Anmelder: Blue Technologies BV, 4387 PK Vlissingen (NL)
(72) Erfinder: BENNER, Moritz, 61273 Wehrheim (DE)
(74) Vertreter: Wunderlich & Heim Patentanwälte Partnerschaftsgesellschaft mbB

(57) **Zusammenfassung**

Die Erfindung betrifft Automobil mit einem Fahrzeuggrundkörper, einer Vorderradeinheit mit zwei Vorderrädern, welche unter Ausbildung einer Vorderradachse lenkbar an dem Fahrzeuggrundkörper gelagert sind, und einer Hinterradeinheit, welche mindestens zwei Hinterräder aufweist, welche angetrieben und unter Ausbildung einer ersten Hinterradachse an dem Fahrzeuggrundkörper gelagert sind. Nach der Erfindung ist vorgesehen, dass die Hinterradeinheit zusätzlich mindestens ein Innenrad aufweist, welches zwischen den zwei ersten Hinterrädern entlang einer zweiten Hinterradachse gelagert ist, dass die zweite Hinterradachse gegenüber der ersten Hinterradachse axial versetzt ist und dass eine erste elektrische Antriebsanordnung zum Antreiben der Hinterräder der ersten Hinterradachse und eine zweite elektrische Antriebsanordnung zum Antreiben des mindestens einen Innenrades der zweiten Hinterradachse angeordnet sind.

## Beschreibung

Die Erfindung betrifft ein Automobil mit einem Fahrzeuggrundkörper, einer Vorderradeinheit mit zwei Vorderrädern, welche unter Ausbildung einer Vorderradachse lenkbar an dem Fahrzeuggrundkörper gelagert sind, und einer Hinterradeinheit, welche mindestens zwei Hinterräder aufweist, welche angetrieben und unter Ausbildung einer ersten Hinterradachse an dem Fahrzeuggrundkörper gelagert sind, gemäß dem Oberbegriff des Anspruchs 1.

Die Erfindung betrifft weiter ein Verfahren zum Betreiben eines Automobils gemäß dem Oberbegriff des Anspruchs 10.

Sportwägen gibt es in verschiedenen Ausprägungen. Zum einen sind im unteren Preissegment bereits entsprechend motorisierte Fahrzeuge oder Automobile von Mittelklasseherstellern vorhanden. Das High-end-Preissegment wird durch sogenannte Hypercars definiert, die meist Preise im siebenstelligen Bereich haben und oft nur in Kleinserien mit streng limitierter Stückzahl hergestellt werden.

Derartige Fahrzeuge bieten ihrem Besitzer ein entsprechend hohes Leistungsspektrum, wobei einer der hierbei relevanten Punkte die Beschleunigung ist. Neben der Problematik, die Antriebskraft über entsprechend angetriebene Räder auf die Fahrbahn zu übertragen und so in Vortrieb und Beschleunigung umzusetzen, besteht gerade bei Automobilen mit einem sehr hohen Beschleunigungspotential das Problem, dass diese dazu tendieren, im vorderen Bereich weniger Druck auf die Straße aufzubauen und die Front anzuheben. Dies kann sogar bis zu einem Überschlag des Fahrzeuges führen. Diese Problematik erhöht sich grundsätzlich, wenn Elektroanriebe eingesetzt werden, welche besonders hoher Anfangsdrehmomente erzeugen.

Um einen Überschlag zu verhindern, ist es etwa bei Dragsterrennwägen bekannt, einen sogenannten Wheelybar vorzusehen, der als Verlängerung des Automobils angesehen werden kann und mit einem weiteren Rad einen zusätzlichen Straßenkontakt ermöglicht. Hierdurch kann ein Heben und Entlasten des Frontbereichs des Automobils reduziert werden.

Weiter ist es bekannt, einen entsprechend langen Radstand vorzusehen und/oder hohes Gewicht im Bereich der Vorderachse vorzusehen.

Alle diese Möglichkeiten führen zwar zu dem gewünschten Effekt, dass ein Entlasten der Vorderräder beziehungsweise ein Anheben der Front des Automobils minimiert oder verhindert wird, jedoch stellen sie zum einen optisch unschöne Lösungen dar, die auch im Straßenverkehr nicht erlaubt sind. Zum anderen verringert das Vorsehen von zusätzlichen Gewichten wiederum das Leistungsgewicht eines derartigen Automobils, so dass dies auch unerwünscht ist.

Der Erfindung liegt daher die **Aufgabe** zugrunde, ein Automobil sowie ein Verfahren anzugeben, welche ein effizientes Betreiben eines Automobils ermöglichen.

Diese Aufgabe wird zum einen durch ein Automobil mit den Merkmalen des Anspruchs 1 sowie ein Verfahren zum Betreiben eines Automobils mit den Merkmalen des Anspruchs 10 gelöst.

Vorteilhafte Ausführungsformen der Erfindung sind in den abhängigen Ansprüchen, in der Beschreibung sowie in der Figur und deren Erläuterung angegeben.

Das erfindungsgemäße Automobil ist dadurch gekennzeichnet, dass die Hinterradeinheit zusätzlich mindestens ein Innenrad aufweist, welches zwischen den zwei ersten Hinterrädern entlang einer zweiten Hinterradachse gelagert ist, dass die zweite Hinterradachse gegenüber der ersten Hinterradachse axial versetzt ist und dass eine erste elektrische Antriebsanordnung zum Antreiben der Hinterräder der ersten Hinterradachse und eine zweite elektrische Antriebsanordnung zum Antreiben des mindestens einen Innenrades der zweiten Hinterradachse angeordnet sind.

Eine Grundidee der Erfindung besteht darin, in normaler Fahrtrichtung hinter oder vor der ersten Hinterradachse mindestens ein weiteres Hinterrad anzuordnen. Dieses Hinterrad dient zur weiteren Abstützung des Automobils beim Beschleunigen und verhindert oder reduziert eine Nickbewegung in Bezug auf die Hochachse des Automobils beim Beschleunigen. Ein Beschleunigen im Sinne der Erfindung kann auch ein negatives Beschleunigen umfassen, also ein Bremsen. Der axiale Versatz der beiden Hinterräder erlaubt eine insgesamt verbesserte Abstützung des Fahrzeuges auf der Fahrbahn.

Gemäß einem weiteren Aspekt der Erfindung wird ein effizientes Beschleunigen und Fahren des Automobils dadurch erzielt, dass eine erste elektrische Antriebsanordnung zum Antreiben der Hinterräder der ersten Hinterradachse und eine zweite elektrische Antriebsanordnung zum Antreiben des mindestens einen Innenrades der zweiten Hinterradachse angeordnet sind. Die beiden elektrischen Antriebsanordnungen können dabei unterschiedlich zueinander betrieben und angesteuert werden. Hierdurch kann eine besonders effiziente Beschleunigung des Fahrzeuges erreicht werden, wobei elektrische Antriebe grundsätzlich unabhängig von der Drehzahl und damit bereits bei Beginn des Antriebes ein hohes, insbesondere ein maximales Drehmoment aufbringen können.

Weiter besteht die Möglichkeit, mit einer elektrischen Antriebsanordnung ein Drehmoment aufzubringen, während die andere elektrische Antriebsanordnung in einem Rekuperationsbetrieb gefahren wird. Dies kann bei bestimmten Fahrsituationen zu einer erhöhten Stabilität führen und zudem zur Energieeinsparung und damit für ein effizienteres Fahren sorgen.

Grundsätzlich können die Hinterräder jeweils mittels einer zentralen Elektroantriebseinrichtung für jede Hinterradachse angetrieben werden. Besonders vorteilhaft ist es nach einer Weiterbildung der Erfindung, dass die ersten Hinterräder der ersten Hinterradachse und das mindestens eine Innenrad der zweiten Hinterradachse jeweils über einen Elektroantrieb angetrieben sind. Somit weisen die einzelnen Räder jeweils einen einzelnen Elektroantrieb auf. Hierbei kann auch ein differenziertes Ansteuern der Räder einer Hinterradachse erfolgen. So kann etwa bei einer Kurvenfahrt das in Richtung des Kurvenradius außenliegende Hinterrad stärker angetrieben sein als das innenliegende Hinterrad.

Das in Radiusrichtung innenliegende Hinterrad kann dabei sogar in einem Rekuperationsbetrieb, also mit einem Widerstand, betrieben werden, so dass ein Fahren auch mit einem sehr engen Kurvenradius oder in einem spitzen Winkel erreicht werden kann. In Kombination mit elektrischen Antriebsanordnungen können so besonders hohe Beschleunigungen des Fahrzeugs bei sehr guter Fahrstabilität erreicht werden.

Für ein effizientes Betreiben des Automobils kann es dabei besonders vorteilhaft sein, dass elektrische Antriebsanordnungen und/oder die Elektroantriebe zum Antreiben der Hinterräder einschließlich des Innenrades sowohl in einem Antriebsmodus als auch in einem Rekuperationsmodus betrieben werden können. In einem Antriebsmodus wird ein Drehmoment auf die entsprechenden Räder aufgebracht. In einem Rekuperationsmodus werden die jeweils zugeordneten Elektroantriebe als Generator betrieben, so dass die Radbewegung zum Erzeugen elektrischer Energie genutzt werden kann. Die elektrische Energie kann in grundsätzlich bekannter Weise in einem Akkumulator des Automobils gespeichert werden.

Besonders zweckmäßig ist es dabei, dass eine Antriebssteuerung vorgesehen ist, welche ausgebildet ist, eine elektrische Antriebsanordnung oder einzelne Elektroantriebe in einem Antriebsmodus zu betreiben, während gleichzeitig die andere Antriebsanordnung oder andere Elektroantriebe im Rekuperationsmodus betrieben werden. Dies kann in bestimmten Fahrsituationen sowohl bei einer Geradeausfahrt als auch bei einer Kurvenfahrt zur Fahrstabilität beitragen und durch die Energierückgewinnung ein besonders effizientes Fahren ermöglichen.

Insbesondere besteht eine vorteilhafte Ausgestaltung des erfindungsgemäßen Automobils darin, dass die Antriebssteuerung ausgebildet ist, die Hinterräder einer Hinterradachse anzutreiben, während die Hinterräder beziehungsweise das mindestens eine Innenrad der anderen Hinterradachse zur Energiegewinnung im Rekuperationsmodus betrieben wird. Es kann dabei ein Effekt erzielt werden, der ähnlich einer teilweisen Zylinderabschaltung bei Rennsportwägen mit Verbrennungsmotor entspricht. Insgesamt kann ein besonders effizientes Fahren mit hoher Fahrstabilität erzielt werden.

Bevorzugt ist es, wenn zwei Innenräder entlang der zweiten Hinterachse angeordnet sind. Beim Vorsehen von zwei Innenrädern ist es wesentlich, dass diese zwischen den beiden Hinterrädern angeordnet sind. Betrachtet man die Spurweite, so haben die zwei Innenräder eine geringere Spurweite als die auf der ersten Hinterachse befindlichen zwei Hinterräder. Hierdurch bleibt trotz der zusätzlichen Räder ein attraktives Kurvenfahrverhalten erhalten. Um dieses Kurvenfahrverhalten zu unterstützen, kann die Stützeinrichtung sogar invers funktionieren und den Druck der Innenräder auf den Boden verringern, wenn keine Beschleunigung mehr auf das Automobil einwirkt, um das Kurvenfahrverhalten weiter zu verbessern.

Zwei Innenräder bieten grundsätzlich gegenüber einem Innenrad den Vorteil, dass ein besseres Abstützen möglich ist und somit weniger Kraft auf die einzelnen Innenräder aufgebracht werden muss.

Weiter ist es besonders bevorzugt, dass eine Stützeinrichtung vorgesehen ist, durch welche zwischen dem mindestens einen Innenrad und dem Fahrzeuggrundkörper eine Stützkraft erzeugbar ist, durch welche bei einem Beschleunigen des Automobils die Vorderradeinheit insbesondere gegen den Boden drückbar ist. Entsprechend dieser Ausgestaltung der Erfindung ist eine Stützeinrichtung vorgesehen. Diese ist im Wesentlichen zwischen der Lagerung beziehungsweise der Aufhängung des Innenrades und dem Fahrzeuggrundkörper oder der äußeren Hinterräder vorgesehen. Über die Stützeinrichtung ist eine Stützkraft erzeugbar, durch welche bei der Beschleunigung des Automobils insbesondere die Vorderradeinheit gegen den Boden gedrückt wird. Anders ausgedrückt, kann mittels der Stützeinrichtung aktiv eine Kraft auf den Fahrzeuggrundkörper aufgebracht werden, die gegen das Anheben des vorderen Bereichs des Automobils wirkt. Hierdurch ist es möglich, die Anpresskraft gerade im vorderen Bereich des Automobils auf die Straße sogar zu definieren und so eine sichere und effiziente Kraftübertragung und Führung des Gesamtsystems Automobil auf dem Untergrund zu ermöglichen. So ist etwa ein sehr schneller, kontrollierter Start des Fahrzeugs möglich.

Weiterhin ist es vorteilhaft, dass die Stützeinrichtung mindestens ein Krafterzeugungselement aufweist, durch welches die Stützkraft erzeugbar ist, und dass das Krafterzeugungselement einen Druckzylinder, insbesondere eine Hydraulikzylinder, aufweist. Grundsätzlich kann die Stützkraft in der Stützeinrichtung beliebig erzeugt werden. Bevorzugt ist es, wenn hierfür ein Krafterzeugungselement, insbesondere ein aktives Krafterzeugungselement, verwendet wird. Die Stützeinrichtung kann so beispielsweise in Form eines Druckzylinders, insbesondere eines Hydraulikdruckzylinders, ausgeführt sein. Grundsätzlich sind aber auch andere Möglichkeiten für ein Krafterzeugungselement denkbar. Je nach exakter Ausführung können beispielsweise auch Elektromotoren, elektromagnetische Zylinder oder auch andere elektromagnetische Anordnungen verwendet werden.

Bevorzugt ist eine Steuerung vorgesehen, welche programmierbar und/oder programmgesteuert betreibbar ist. So kann auch nach der Auslieferung oder sogar während einer Fahrt die Steuerung angepasst werden kann. Hierdurch ergeben sich unterschiedliche Optimierungsmöglichkeiten, wodurch deutlich höhere Freiheitsgrade für ein derartiges Automobil vorliegen.

Weiter kann durch die Steuerung auch die Stützeinrichtung aktiv ansteuerbar sein, wobei die Stützkraft veränderbar ist. Auf diese Weise können die auf das Automobil einwirkenden Kräfte berücksichtigt werden und die Stützkraft der Stützeinrichtung jeweils entsprechend eingestellt werden, so dass ein besonders sicheres Fahrverhalten ermöglicht wird.

In einer weiteren Ausführungsform sind ein oder mehrere Sensoren vorgesehen, durch welche eine Beschleunigung, eine Geschwindigkeit, eine Andruckkraft der Vorderräder auf den Boden und/oder weitere Fahrzustandswerte erfassbar sind. Grundsätzlich können der eine oder die mehreren Sensoren auch nur einen der Werte oder eine beliebige Kombination der aufgeführten Werte sowie weitere Größen zu Fahrzustandswerten erfassen.

Es ist außerdem vorteilhaft, wenn der eine oder die mehreren Sensoren mit der Steuerung in Verbindung stehen, wobei durch die Steuerung die Stützeinrichtung abhängig von den erfassten Fahrzustandswerten ansteuerbar ist. Auf diese Weise kann erreicht werden, dass die Stützkraft der Stützeinrichtung an die entsprechenden Umgebungsvariablen angepasst wird, so dass durch diese Konstruktion eine effiziente Kraftübertragung der Antriebsenergie auf den Untergrund, beispielsweise eine Straße, ermöglicht wird und während des Beschleunigung ausreicht Kontakt zwischen der Vorderradeinheit und dem Boden besteht.

Ferner betrifft die Erfindung ein Verfahren zum Betreiben eines Automobils, wobei die Hinterräder der ersten Hinterradachse mit einer ersten elektrischen Antriebsanordnung angetrieben werden und dass das mindestens eine Innenrad der zweiten Hinterradachse mit einer zweiten elektrischen Antriebsanordnung angetrieben werden.

Das erfindungsgemäße Verfahren kann mit einem zuvor beschriebenen Automobil ausgeführt werden. Dabei können sich die zu dargelegten Vorteile ergeben.

Die Erfindung wird nachfolgend anhand eines schematischen Ausführungsbeispiels unter Bezugnahme auf die Figur näher erläutert. Hierbei zeigt:
- Fig. 1: eine stark schematisierte Ansicht eines erfindungsgemäßen Automobils;
- Fig. 2: eine perspektivische Ansicht eines Hinterrades mit einer Radaufhängeschwinge für die Erfindung;
- Fig. 3: eine Querschnittsansicht durch die Radaufhängungsanordnung nach Fig. 2;
- Fig. 4: eine perspektivische Ansicht einer Radaufhängeanordnung nach einer weiteren Ausführungsform der Erfindung entsprechend Fig. 2 und
- Fig. 5: eine Querschnittsansicht durch die Radaufhängeanordnung nach Fig.4.

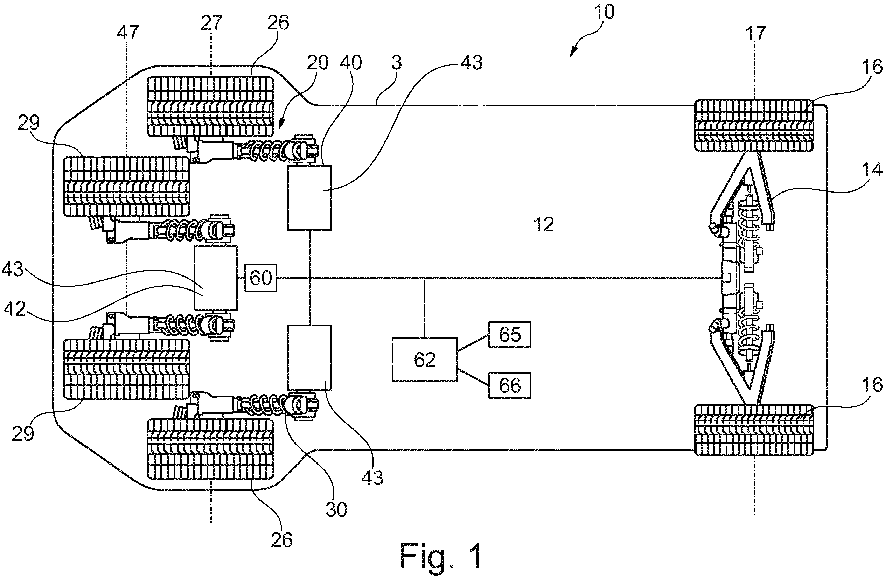

In Figur 1 ist eine schematische Ansicht eines erfindungsgemäßen Automobils 10 dargestellt, anhand der im Folgenden die Erfindung näher erläutert wird.

Das erfindungsgemäße Automobil 10 besitzt eine Karosserie 3, die in Figur 1 nur angedeutet ist. Zusätzlich hat das Automobil 10 einen Fahrzeuggrundkörper 12, der ebenfalls nur angedeutet ist.

An dem Fahrzeuggrundkörper 12 ist eine Vorderradeinheit 14 vorgesehen. Diese weist zwei Vorderräder 16 auf, die eine Vorderradachse 17 bilden. Im rückwärtigen Bereich des Automobils 10 befindet sich eine Hinterradeinheit 20, die ebenfalls zumindest teilweise mit dem Fahrzeuggrundkörper 12 verbunden ist.

Die Hinterradeinheit 20 weist zwei äußere Hinterräder 26 auf, die entlang einer ersten Hinterradachse 27 angeordnet sind. Zusätzlich weist die Hinterradeinheit 20 zwei Innenräder 29 auf, welche auf einer zweiten Hinterradachse 47 angeordnet sind. Sowohl die äußeren Hinterräder 26 als auch die Innenräder 29 besitzen jeweils eine Radaufhängungsanordnung mit einer Radaufhängeschwinge 30, mittels der sie mit dem Fahrzeuggrundkörper 12 auslenkbar verbunden sind. Innerhalb jeder Radaufhängeschwinge 30, welche jeweils hohl ausgebildet ist, ist eine Radantriebswelle zur Übertragung des Antriebsdrehmoments an das jeweilige Hinterrad 26 beziehungsweise an das jeweilige Innenrad 29 angeordnet.

Zum Antrieb der Hinterräder 26 der ersten Hinterradachse 27 ist eine erste elektrische Antriebsanordnung 41 vorgesehen. Die erste elektrische Antriebsanordnung 41 weist dabei zwei einzelne Elektroantriebe 43 auf, welche jeweils das zugeordnete Hinterrad 26 über die Radantriebswelle antreiben.

Zum Antreiben der zwei inneren Hinterräder oder Innenräder 29 ist eine zweite elektrische Antriebsanordnung 42 vorgesehen, welche im dargestellten Ausführungsbeispiel einen einzelnen Elektroantrieb mit zwei Abtriebswellen aufweist. Abhängig von der Dimensionierung können auch die Innenräder 29 jeweils über einen einzelnen Elektroantrieb 43 angetrieben sein.

Für eine maximale Beschleunigung und einen maximalen Vortrieb sind die beiden elektrischen Antriebsanordnungen 41, 42 in einem Antriebsmodus geschaltet, wozu eine Antriebssteuerung 62 vorgesehen ist. Für eine Energierückgewinnung können bei einem Bremsvorgang die Antriebsanordnungen 41, 42 in einem Rekuperationsmodus betrieben werden, so dass die Radbewegung durch die elektrischen Antriebe 43 abgebremst und in elektrische Energie umgesetzt wird. Diese elektrische Energie kann in grundsätzlich bekannter Weise einem nicht dargestellten Akkumulator zur Energiespeicherung rückgeführt werden.

In bestimmten Fahrsituationen kann es nach der Erfindung zweckmäßig sein, eine der elektrischen Antriebsanordnungen 41, 42 in einem Antriebsmodus zu betreiben, während die andere elektrische Antriebsanordnung 41, 42 gleichzeitig in einem Rekuperationsmodus betrieben wird. Somit kann etwa durch die zweite elektrische Antriebsanordnung 42 elektrische Energie rückgewonnen werden, welche etwa der ersten elektrischen Antriebsanordnung 41 zum Antrieb der äußeren Hinterräder 26 zur Verfügung gestellt wird. Dies kann Vorteile etwa bei einem erneuten Beschleunigen des Automobils 10 mit sich bringen, weil einzelne Antriebe weiter im Antriebsmodus geschaltet bleiben.

Wie in Figur 1 gezeigt, weisen die beiden Hinterräder 26 einen breiteren Radstand auf als die beiden Innenräder 29. Des Weiteren sind die beiden Innenräder 29 in Fahrtrichtung nach hinten bezüglich der ersten Hinterradachse 27 versetzt angeordnet. Hierbei ist die zweite Hinterradachse 47 etwa um den Durchmesser der Hinterräder 26 beziehungsweise Innenräder 29 axial in Fahrtrichtung versetzt. Grundsätzlich sollte der Versatz nicht größer sein als der Durchmesser der Hinterräder 26 beziehungsweise der Innenräder 29.

Zusätzlich kann eine Stützeinrichtung 60 vorgesehen sein. Diese ist zwischen den Innenrädern 29 und den Fahrzeuggrundkörper 12 angeordnet. Über die Stützeinrichtung 60 kann eine Stützkraft erzeugt werden, die beim Beschleunigen des Automobils 10 die Vorderradeinheit 14 gegen den Boden drückt. Auf diese Art wird ein Abheben des Vorderteils des Automobils 10 beim Beschleunigen reduziert oder sogar verhindert. Auch wird hierdurch der Anpressdruck der Vorderräder 16 erhöht, so dass, wenn diese ebenfalls angetrieben sind, die Traktion verbessert wird, was insbesondere bei einem Anfahren und starken Beschleunigen mit den elektrischen Antriebsanordnungen 41, 42 vorteilhaft ist.

Zur Steuerung der Stützeinrichtung 60 kann eine eigene Steuerung oder die Antriebssteuerung 62 vorgesehen, die in der hier dargestellten Ausführungsform zwei Sensoren 65 und 66 aufweisen kann. Bei diesen Sensoren 65, 66 kann es sich beispielsweise um Sensoren zum Bestimmen der Beschleunigung des Automobils 10 in alle drei Raumrichtungen handeln. Die Sensoren 65, 66 können alternativ oder zusätzlich auch den Anpressdruck der Vorderradachse 17, die Geschwindigkeit selbst oder andere Fahrzustandswerte, beispielsweise die Querbeschleunigung, erfassen. Basierend auf diesen Werten steuert die Steuerung 62 die Stützeinrichtung 60. Hierfür kann die Stützeinrichtung 60 einen Druckzylinder, beispielsweise einen Hydraulikzylinder, aufweisen.

Durch ein Integrieren der Radantriebswelle in eine längs gerichtete Radaufhängeschwinge 30 der Hinterräder 26 wird eine insgesamt sehr kompakte Anordnung der Radaufhänge- und Radantriebsanordnung erreicht. Hierdurch wird es entsprechend der bevorzugten Ausgestaltung nach Fig. 1 ermöglicht, die Hinterradeinheit 20 nicht nur mit zwei äußeren Hinterrädern 26 auszubilden, sondern zusätzlich mit zwei inneren Hinterrädern 29 vorzusehen, welche in Querrichtung und in Längsrichtung versetzt zu den äußeren Hinterrädern 26 angeordnet und mit diesen angetrieben sind.

Die inneren Hinterräder 29 können dabei ebenso über die zuvor beschriebene Radaufhängeschwinge 30 mit einer inneren Radantriebswelle aufgehängt und zusätzlich drehend angetrieben sein. Durch diese Anordnung kann ein Drehmoment auf insgesamt mehr als zwei Hinterräder, im vorliegenden Fall auf vier Hinterräder, aufgebracht werden. Dies ermöglicht eine besonders gute Traktion auch beim Aufbringen großer Antriebsleistungen durch die elektrischen Antriebsanordnungen 41, 42.

Zudem kann die Traktion noch dadurch erhöht werden, dass zwischen der Anordnung der inneren Hinterräder 29, welche gegenüber den äußeren Hinterrädern 26 in Fahrtrichtung nach hinten versetzt sind, aktiv eine Stützkraft gegenüber dem Fahrzeuggrundkörper 12 aufgebracht werden kann, mit welcher einer unerwünschten Nickbewegung des Fahrzeuggrundkörpers 12 beim Anfahren wirksam entgegengewirkt werden kann. Dies fördert weiter das Aufbringen auch hoher Antriebsleistungen auf die angetriebenen Hinterräder 26 bei hoher Fahrstabilität des Automobils, was insbesondere für Sportwägen mit hoher Antriebsleistung vorteilhaft und wünschenswert ist.

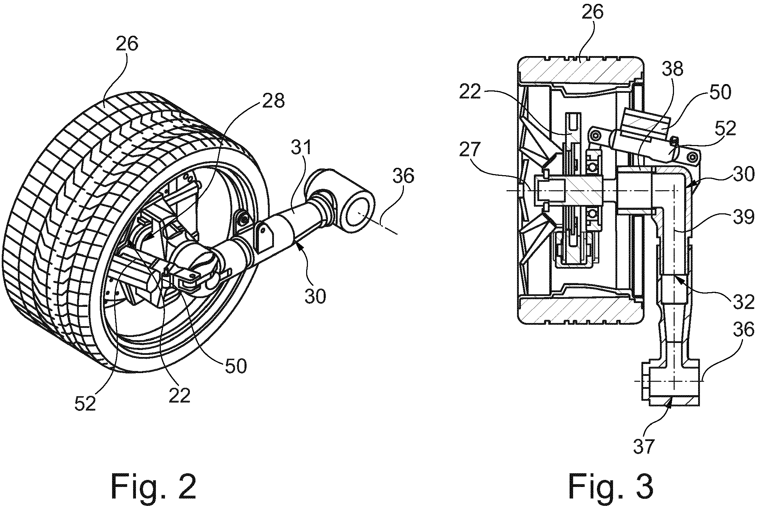

Gemäß einer bevorzugten Variante bei einem erfindungsgemäßen Automobil 10 ist gemäß den Figuren 2 und 3 eine Stelleinrichtung mit einem Stellglied 50 mit Stellzylinder 52 ausgebildet, über welchen ein Radträger 28 des Hinterrades 26 über eine Hochachse des Automobils 10 zum Bewirken einer Hinterradlenkung um einige Winkelgrad ausgelenkt werden kann. Der Stellzylinder 52 ist dabei vorzugsweise ein Hydraulikzylinder.

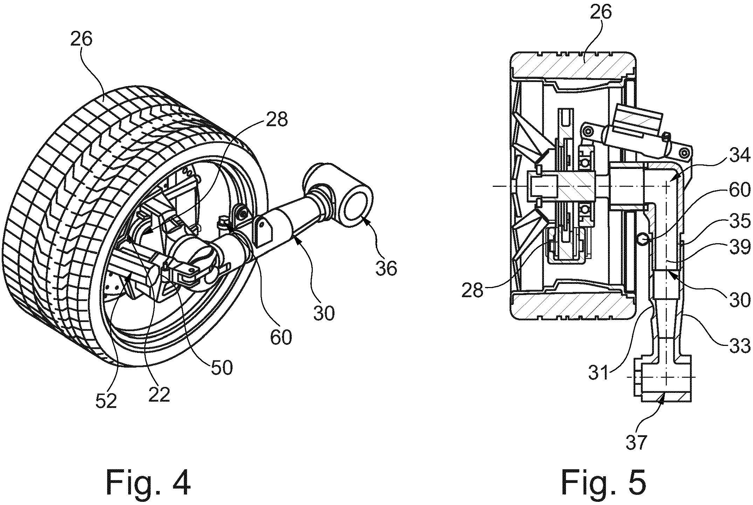

Gemäß den Figuren 4 und 5 ist eine abgewandelte Ausführungsform dargestellt, wobei der grundsätzliche Aufbau der Radaufhängeanordnung der Anordnung gemäß den Figuren 2 und 3 entspricht. Im Unterschied zu der Ausgestaltung nach den Figuren 2 und 3 ist gemäß den Figuren 4 und 5 der Mittenholm 31 der Radaufhängeschwinge 30 zweiteilig mit einem ersten Holmteil 33 und einem zweiten Holmteil 34 ausgebildet.

An dem ersten Holmteil 33 ist die erste Winkelbuchse 37 fest angebracht, so dass das erste Holmteil 33 schwenkbar am Fahrzeuggrundkörper 12 gelagert ist. Das zweite Holmteil 34 weist einen rohrförmigen Lagerabschnitt 35 auf, welcher in einem entsprechenden Aufnahmeraum des ersten Holmteiles 33 drehbar um die Holmlängsachse 39 gelagert ist. An dem zweiten Holmteil 34 mit der zweiten Winkelbuchse 38 ist entsprechend dem vorausgegangen Ausführungsbeispiel der Radträger 28 mit dem Hinterrad 26 gelagert und angeordnet.

Durch die um die Holmlängsachse 39 verdrehbare Lagerung des zweiten Holmteiles 34 am ersten Holmteil 33 kann eine Verstellung des Sturzes des Rades 26 eingestellt werden. Hierzu ist an dem zweiten Holmteil 34 ein Einstellglied 60 angeordnet, welches insbesondere als ein Schneckengetriebe ausgebildet ist. Durch Ansteuerung des Schneckengetriebes kann eine Verdrehung des zweiten Holmteiles 34 um die Holmlängsachse 39 gegenüber dem ersten Holmteil 33 eingestellt und so ein Sturz des Hinterrades 26 verändert werden.

Mittels der Erfindung ist es möglich, selbst bei einer sehr hohen Beschleunigung mit elektrischen Antriebsanordnungen 41, 42 zu erreichen, dass die Vorderräder 16 eines Automobils 10 weiterhin Bodenkontakt halten und so das Automobil 10 einerseits steuerbar bleibt und zum anderen eine möglichst gleichmäßige Verteilung der Andruckkräfte erreicht wird.

## Patentansprüche

1. Automobil mit
- einem Fahrzeuggrundkörper (12),
- einer Vorderradeinheit (14) mit zwei Vorderrädern (16), welche unter Ausbildung einer Vorderradachse (17) lenkbar an dem Fahrzeuggrundkörper (12) gelagert sind, und
- einer Hinterradeinheit (20), welche mindestens zwei Hinterräder (26) aufweist, welche angetrieben und unter Ausbildung einer ersten Hinterradachse (27) an dem Fahrzeuggrundkörper (12) gelagert sind,
**dadurch gekennzeichnet,**
- **dass** die Hinterradeinheit (20) zusätzlich mindestens ein Innenrad (29) aufweist, welches zwischen den zwei ersten Hinterrädern (26) entlang einer zweiten Hinterradachse (47) gelagert ist,
- **dass** die zweite Hinterradachse (47) gegenüber der ersten Hinterradachse (27) axial versetzt ist und
- **dass** eine erste elektrische Antriebsanordnung (41) zum Antreiben der Hinterräder (26) der ersten Hinterradachse (27) und eine zweite elektrische Antriebsanordnung (42) zum Antreiben des mindestens einen Innenrades (29) der zweiten Hinterradachse (47) angeordnet sind.

2. Automobil nach Anspruch 1,
**dadurch gekennzeichnet,**
**dass** zwei Innenräder (29) entlang der zweiten Hinterradachse (47) angeordnet sind.

3. Automobil nach Anspruch 1 oder 2,
**dadurch gekennzeichnet,**
**dass** die ersten Hinterräder (26) der ersten Hinterradachse (27) und/oder das mindestens eine Innenrad (29) der zweiten Hinterradachse (47) jeweils über einen eigenen Elektroantrieb (43) angetrieben sind.

4. Automobil nach einem der Ansprüche 1 bis 3,
**dadurch gekennzeichnet,**
**dass** die elektrischen Antriebsanordnungen (41, 42) und/oder die Elektroantriebe (43) zum Antreiben der Hinterräder (26, 29) sowohl in einem Antriebsmodus als auch in einem Rekuperationsmodus betreibbar sind.

5. Automobil nach Anspruch 4,
**dadurch gekennzeichnet,**
**dass** eine Antriebssteuerung (62) vorgesehen ist, welche ausgebildet ist, eine Antriebsanordnung (41, 42) oder einzelne Elektroantriebe (43) in einem Antriebsmodus zu betrieben, während gleichzeitig die andere Antriebsanordnung (41, 42) oder andere Elektroantriebe (43) im Rekuperationsmodus betrieben werden.

6. Automobil nach Anspruch 5,
**dadurch gekennzeichnet,**
**dass** die Antriebssteuerung (62) ausgebildet ist, die Hinterräder (26) einer Hinterradachse (27) anzutreiben, während die Hinterräder (29) der anderen Hinterradachse (47) zur Energiegewinnung im Rekuperationsmodus betrieben sind.

7. Automobil nach einem der Ansprüche 1 bis 5,
**dadurch gekennzeichnet,**
**dass** eine Stützeinrichtung (60) vorgesehen ist, durch welche zwischen dem mindestens einen Innenrad (29) und dem Fahrzeuggrundkörper (12) eine Stützkraft erzeugbar ist, durch welche bei einem Beschleunigen des Automobils (10) die Vorderradeinheit (14) insbesondere gegen den Boden drückbar ist.

8. Automobil nach Anspruch 7,
**dadurch gekennzeichnet,**
**dass** die Stützeinrichtung (60) mindestens ein Krafterzeugungselement aufweist, durch welches die Stützkraft erzeugbar ist, und
**dass** das Krafterzeugungselement einen Druckzylinder, insbesondere eine Hydraulikzylinder, aufweist.

9. Automobil nach Anspruch 7 oder 8,
**dadurch gekennzeichnet,**
**dass** die Antriebssteuerung (62) programmierbar und/oder programmgesteuert betreibbar ist.

10. Verfahren zum Betreiben eines Automobils (10) nach einem der Ansprüche 1 bis 9,
**dadurch gekennzeichnet,**
**dass** die Hinterräder (26) der ersten Hinterradachse (27) mit einer ersten elektrischen Antriebsanordnung angetrieben werden und
**dass** das mindestens eine Innenrad (27) der zweiten Hinterradachse (47) mit einer zweiten elektrischen Antriebsanordnung angetrieben werden.
